# EUROPÄISCHE PATENTANMELDUNG

(11) **EP 1 229 467 A1**
(43) Veröffentlichungstag der Anmeldung: **07.08.2002**
(21) Anmeldenummer: 01102566.5
(22) Anmeldetag: 06.02.2001
(51) Int. Cl.: G06F 17/60, G07F 19/00, G07F 7/10

(54) **Bezahlsystem mit einem mobilen Gerät**

(71) Anmelder: Wincor Nixdorf GmbH & Co KG, 33106 Paderborn (DE)
(72) Erfinder: Löser, Martin, 33102 Paderborn (DE)

(57) **Zusammenfassung**

Durchführung von Zahlungsvorgängen, wobei
- eine Kasse eine Zahlungsaufforderung drahtlos an ein mobiles Gerät eines Kunden überträgt,
- dieses die Zahlungsaufforderung prüft,
- bei positivem Ergebnis daraus eine Zahlungsanweisung erzeugt,
- diese an eine Zahlungszentrale übermittelt,
- die Zahlungszentrale die Zahlungsanweisung prüft,
- bei positivem Ergebnis die Zahlungszentrale der Kasse eine Zahlungsbestätigung schickt,
- die Kasse die Zahlungsbestätigung prüft,
- bei positvem Ergebnis dieses anzeigt bzw. zu bezahlende Ware freigibt.

## Beschreibung

Die Erfindung betrifft die Abwicklung von elektronisch durchgeführten Zahlungsvorgängen unter Verwendung eines mobilen Geräts, das eine drahtlose Datenverbindung benutzt.

In der europäischen Patentanmeldung EP 0 708 547 A2 wird die Verwendung von Mobiltelefonen zur Bezahlung beschrieben. Hierbei wird ausgenutzt, daß allein schon für den Aufbau einer Verbindung wegen deren Abrechnung eine sichere Identifikation des Teilnehmers benötigt wird. Daher wird bei diesem Vorschlag der Betrag vom Teilnehmer auf seinem Mobiltelefon eingegeben, vom Netzbetreiber bestätigt und der Kasse des Händlers übermittelt. Es wird ferner vorgeschlagen, eine drahtlose Verbindung zwischen Kasse und Mobiltelefon zu verwenden, bei der die Kasse die Kommunikation zur Zentrale abhört bzw. abfängt; ungeachtet dessen, daß diese Verbindung verschlüsselt ist und nicht von Dritten abhörbar sein sollte.

In der internationalen Veröffentlichung WO 98/47116 wird ein Bezahlsystem beschrieben, bei dem ein Mobiltelefon die Zahlung bestätigt. Hierzu wird ein als TSN bezeichneter Rechner verwendet, der die Abwicklung des Zahlungverkehrs makelt. Das Mobiltelefon sendet eine Nachricht an die TSN, in der die empfangende Kasse und der Betrag bezeichnet sind. Die TSN sendet daraufin eine Bestätigung an die Kasse. Eine direkte Kommunikation über eine Nahverbindung ist nicht beschrieben.

In der internationalen Veröffentlichung WO 98/52151 wird ein Bezahlsystem beschrieben, in dem der Bezahlvorgang durch ein digital unterschriebene Zahlungsweisung, sozusagen einen elektronischen Scheck, bewirkt wird.

In der internationalen Veröffentlichung WO 98/11519 wird ein System zur bargeldlosen Bezahlung mit einem Mobilfunkgerät beschrieben. Dabei wird eine Verbindung von dem Mobilfunkgerät an ein Geschäftsendgerät, z.B. eine Kasse, aufgebaut und darüber der Kasse die Bonität des Kunden bestätigt. Nach der Bonitätsprüfung sendet die Kasse den Betrag über die Mobilfunkverbindung an das Mobiltelefon, wo der Kunden die Zahlung bestätigt. Daher wird die Mobilfunkverbindung die gesamte Zeit aufrechterterhalten und vom Kunden bezahlt. In der Anmeldung ist eine drahtlose Nahverbindung über z.B. Infrarot vorgesehen, über die jedoch lediglich die Telefonnummer der Kasse übertragen wird.

In der Patentschrift DE 199 61 793 C1 wird das Verfahren der vorgenannten Schrift in Bezug auf Warenautomaten dahingehend verbessert, daß über eine drahtlose Nahverbindung der Kunde eine Auswahl von Waren treffen kann und die gewählten Waren dann in bekannter Art bezahlt werden.

In der Offenlegungsschrift DE 199 03 822 A1 ist ein Bezahlsystem beschrieben, in dem ein Mobiltelefon zur Bestätigung der Zahlung verwendet wird. Die Händlerstation sendet eine Anfrage an eine Abgleicheinrichtung, die ihrerseits eine Anfrage an das Mobiltelefon sendet und bei passender Antwort der Händlerstation eine Bestätigung schickt. Eine drahtlose Verbindung zwischen der Händlerstation und dem Mobiltelefon dient lediglich zur Optimierung des Verfahrens, um Daten zu übertragen, die andernfalls per Hand einzugeben wären. Insbesondere muß die Abgleicheinrichtung einen Transaktionsspeicher aufweisen, in dem begonnene und noch nicht abgeschlossene Transaktionen abgelegt werden, während die Verbindung zum Mobiltelefon aufgebaut, gehalten und abgebaut wird. Daher ist die Antwortzeit des Käufers in der Verbindungszeit enthalten, so daß Systeme erhöhter Zuverlässigkeit benötigt werden.

Es ist Aufgabe der vorliegenden Erfindung, ein Bezahlsystem anzugeben, das bezüglich der genannten Vorschläge verbessert ist.

Insbesondere wird eine drahtlose Nahbereichs-Verbindung zwischen einer Kasse (bzw. einem anderen Händlerterminal, von dem eine Bezahlung verbucht werden soll) und einem Mobiltelefon (oder einem anderen Gerät mit einem Mobilfunkoder anderen Datennetzwerk) verwendet, um den zu bezahlenden Betrag sowie die Adresse der Kasse an das Mobiltelefon zu übermitteln. Dieser Vorgang erfolgt 'offline', d.h ohne Mobilfunkverbindung. Der Kunde bestätigt den Betrag, woraufhin das Mobiltelefon eine Verbindung zu einer Zahlungszentrale aufbaut und dorthin eine Zahlungsanweisung übermittelt.

In einer ersten Variante kann die Verbindung sofort wieder abgebaut werden; bei passender Auslegung kann insbesondere der 'short messages service' (SMS) verwendet werden, der die Nachricht zu einem Pauschalpreis ohne zeitbezogene Verbindungskosten übermittelt. Die Zahlungszentrale prüft die Zahlungsanweisung und sendet nunmehr an die in der Zahlungsanweisung enthaltenen Adresse der Kasse eine Zahlungsbestätigung. Mit Empfang der Zahlungbestätigung ist der Kassiervorgang abgeschlossen. Auch diese Verbindung muß nicht längere Zeit gehalten werden; zudem benötigt die Zahlungszentrale benötigt keinen Transaktionsspeicher, da keine bidirektionale Kommunikation notwendig ist.

In einer zweiten Variante wird die Nahverbindung benutzt, um die Zahlungsbestätigung an die Kasse zu senden, die damit keine eigene Netzwerkverbindung benötigt. Statt dessen wird entweder die Verbindung vom Mobiltelefon zur Zahlungszentrale aufrechterhalten oder von der Zentrale erneut aufgebaut. Beide Möglichkeiten können kurzfristig je nach Netzlast, Tageszeit, Region usw. gewechselt werden. Bevorzugt erfolgt diese Funktion transparent im Mobiltelefon, indem beispielsweise ein IP-Netzwerk verwendet wird, in dem das Mobiltelefon Routerfunktion übernimmt. Mit der Einführung von GPRS als Mobilfunksystem, bei dem eine Volumengebühr anstelle einer Zeitgebühr erhoben wird, ist diese Vorgehensweise besonders zweckmäßig.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

### Kurzbeschreibung der Zeichnungen

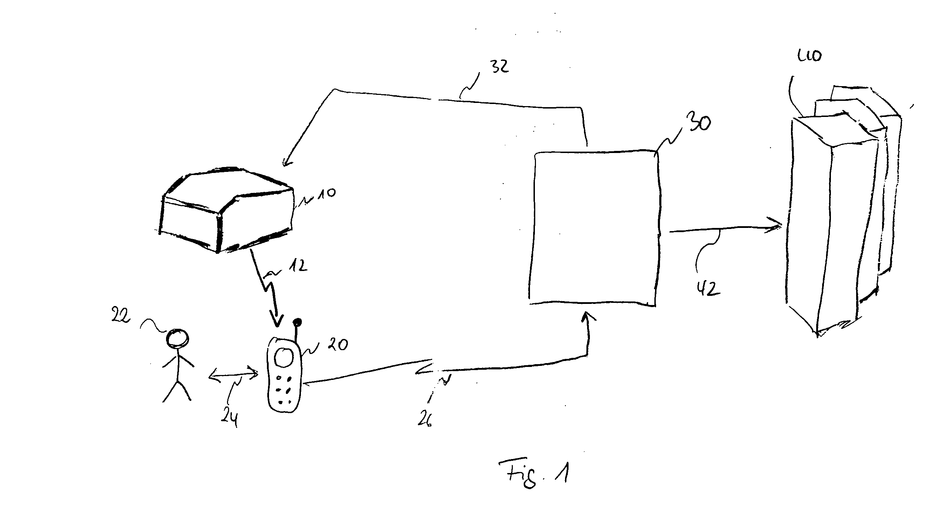

Es zeigt
- Fig. 1: eine symbolische Darstellung der bei der Erfindung beteiligten Komponenten und deren Verbindungen.

### Beschreibung einer Ausführungsform der Erfindung

Im folgenden wird die Erfindung an Hand eines Ausführungsbeispiels beschrieben.

In Fig. 1 ist eine Kasse 10 dargestellt, die hier für ein beliebiges Gerät steht, das einen Zahlungsvorgang auslöst. Nahe der Kasse befindet sich ein Kunde 22, der über ein mobiles Gerät 22, insbesondere ein Mobiltelefon, verfügt. Der Kunde 22 bedient das mobile Gerät 20 über eine Schnittstelle mit Tasten und Anzeigen, hier als Verbindung 24 symbolisiert. Über ein Nahfeld-Netzwerk kann eine drahtlose erste Verbindung 12 zwischen Kasse 10 und mobilem Gerät 20 eingerichtet werden. Weiterhin wird ein zweite Verbindung 26 zwischen mobilem Gerät 20 und einer Zahlungszentrale 30 verwendet, die über eine drahtlose zweite Verbindung bewirkt wird, welche eine Fernverbindung darstellt. Hierfür kann insbesondere das bekannte Mobilfunknetz mit den bekannten Standards wie GSM, GPRS und UTMS verwendet werden. Dabei muß der Zahlungsserver nicht dem Netzanbieter zugeordnet sein, so daß auch ein lokales Funknetzwerk ('wireless LAN'), z.B. nach dem Standard IEEE 802.11, verwendet werden kann, wenn als mobiles Gerät kein Mobiltelefon verwendet wird oder dieses zusätzlich diese Schnittstelle aufweist.

Weiterhin wird eine dritte Datenverbindung 32 zwischen der Zahlungszentrale 30 und der Kasse 10 verwendet. Diese kann, wie weiter unten genauer dargestellt wird, insbesondere ein ganz oder teilweise drahtgebundenes Festnetz bekannter Art sein, da sowohl die Zahlungszentrale 30 als auch die Kasse 10 stationär sind.

Weiterhin wird eine vierte Verbindung zwischen dem Zahlungszentrale 30 und einem oder mehreren Bankservern 40 benötigt. Der Kunde 22 hat mit der den jeweils benutzten Bankserver betreibenden Bank eine Geschäftsbeziehung und kann meist mittels seines mobilen Geräts 20 einen Kontostand abfragen und insbesondere ermitteln, ob, wie weiter unten genauer beschrieben, über die vierte Verbindung 42 eine Belastung seines Kontos stattgefunden hat.

Die Erfindung richtet sich auf einen Bezahlvorgang, der einsetzt, nachdem ein Kunde Ware ausgewählt hat und bisher entweder mit Bargeld, einer Kundenkarte oder einer Kreditkarte bezahlen würde. Das von dem Händler hierzu verwendete Gerät wird im folgenden als Kasse bezeichnet. Selbstverständlich sind auch Warenautomaten u.ä. oder Dienstleistungsautomaten gemeint.

Gemäß der Erfindung wird zwischen einem mobilen Gerät eines Kunden und der Kasse eine drahtlose Datenverbindung aufgebaut. Hierzu wird bevorzugt ein Nahfeld-Funknetzwerk wie Bluetooth verwendet; gleichfalls möglich sind andere Verbindungstechniken wie IrDA oder proprietäre Verbindungen. Über diese Verbindung sendet die Kasse an das mobile Gerät des Kunden einen Datensatz, der eine Zahlungsaufforderung darstellt. Diese Zahlungsaufforderung besteht zumindest aus dem Betrag und einer Identifikation der Kasse. Bevorzugt wird auch eine von der Kasse erzeugte, die Zahlung identifizierende laufende Nummer, im folgenden Transaktionsnummer genannt, enthalten sein. Diese kann auch implizit oder explizit in der Identifikation der Kasse enthalten sein. Zweckmäßig, aber nicht notwendig, sind weitere Angaben wie der Zahlungszweck, eine Warenbezeichnung, ein Konto und der lesbare Name des Inhabers der Kasse. Eine kryptographische Sicherung erscheint nicht notwendig.

Nach einer Überprüfung der Zahlungsaufforderung werden die relevanten, ggf. von Kunden per Konfiguration bestimmten, Teile der Zahlungsaufforderung, insbesondere der Betrag, nunmehr auf einem Display des mobilen Geräts des Kunden dargestellt und vom Kunden bestätigt. Daraufhin wird ein zweiter Datensatz, eine Zahlungsaufforderung, erzeugt. Dieser umfaßt zumindest den Betrag und die Identifikation der Kasse; in der Regel auch die Transaktionsnummer und die weiteren Felder. Bevorzugt wird zur Bildung der Zahlungsanweisung die Zahlungsaufforderung digital signiert. In der Regel ist eine Identifikation bzw. Kontonnummer des Kunden in dem Mobiltelefon gespeichert und wird bei der Bildung der Zahlungsaufforderung hinzugefügt; ob sie von der Signatur umfaßt ist, ist unbedeutend. Diese so erstellte Zahlungsaufforderung wird nunmehr an eine Zahlungszentrale über das Mobilfunk-Netzwerk gesendet, wenn es sich um ein Mobiltelefon handelt. Im einfachsten Fall erfolgt dies an eine vorab fest eingetragene Adresse. Die Übermittlung kann beispielsweise mittels einer SMS Nachricht erfolgen. Alternativ kann eine Datenverbindung zu der Zahlungszentrale aufgebaut werden, beispielsweise über die Internet-Protokolle 'udp/ip', 'tcp/ip', 'http' oder 'https', und dann die Nachricht übermittelt werden. Andere Datenverbindungen sind ohne weiteres möglich; auch kann via 'PPP' ein Internetzugang bereitgestellt werden. In GSM-Netzen wird eher eine Modem-Verbindung verwendet werden; in GPRS und UTMS-Netzen sind bereits paketorientierte Protokolle unmittelbar verfügbar.

Mit dem Eintreffen der Zahlungsaufforderung bei der Zahlungszentrale wird diese geprüft, insbesondere wird die digitale Signatur geprüft. Bei Verwendung von 'public key' Verfahren ist der den Kunden identifizierende geheime Schlüssel in dem Mobiltelefon gespeichert und der öffentliche Schlüssel der Zahlungszentrale natürlich auch in dieser vorhanden. Wenn die Zahlungsaufforderung authentisch ist, wird, ggf. nach der Konsultation von Sperrtabellen u.ä., eine Zahlungsbestätigung erzeugt. Diese enthält wieder den Betrag und meist auch die Transaktionsnummer, um der Kasse eine Zuordnung zu erleichtern. Wichtig ist nur, daß der Betrag durch eine digitale Signatur authentisiert und gegen Verfälschung gesichert wird, wobei hier der geheime Schlüssel der Zahlungszentrale zur Signatur benutzt wird. Weitere Felder aus der Zahlungsaufforderung, die nicht spezifisch für den Kunden sind, werden in der Regel angefügt werden. Insbesondere die Kontonummer, der der Betrag gutgeschrieben werden soll, wird bevorzugt mit aufgenommen und mit signiert. Diese Kontonummer ist bevorzugt bereits in der Zahlungsaufforderung enthalten und wird mit der Zahlungsanweisung übermittelt und sodann in die Zahlungsbestätigung mit aufgenommen und signiert. In diesem Fall ist eine vorherige Anmeldung der Kasse bzw. des Kontos des Inhabers der Kasse nicht notwendig. Lediglich muß die Kasse den öffentlichen Schlüssel nicht fälschbar gespeichert haben, weil die digitale Unterschrift der Zahlungsbestätigung die Zusicherung der Zahlungszentrale enthält, daß letzter die Zahlung garantiert.

Für die Übermittlung der Zahlungsbestätigung sind eine Reihe von Möglichkeiten gegeben.

Eine der beiden bevorzugten Möglichkeiten besteht darin, daß die Kasse über ein Netzwerk, insbesondere das Internet, hier insbesondere das Protokoll 'UDP/IP' oder 'TCP/IP' erreichbar ist. Die Zahlungszentrale erhält in diesem Fall eine IP-Adresse mit einer Portnummer, zu der die Verbindung aufgebaut werden soll. Gleichfalls gut möglich ist die Verwendung eines 'universal resource locator', URL, wie er weithin als Internet-Adresse bekannt ist. Für eine Zahlungsbestätigung könnte eine solche URL lauten:
"https://cr7.pdb.pay.fuelworld.com/20000112/132305?xyz"

In diesem Fall wäre Kasse 7 selbst ein HTTP- oder HTTPS-Server, wobei durch Anfügen von '?xyz' im Rahmen der CGI-Syntax Daten übergeben werden. Da das HTTP bzw. HTTPS-Protokoll für die Verbindung TCP/IP verwendet, kann die Zahlungszentrale sicher sein, daß die Nachricht bei der Kasse angekommen ist. Alternativ kann den Kassen eines Geschäfts ein Server zugeordnet sein, der dann über eine feste Verbindung die erfolgte Zahlung an die Kasse signalisiert. Zur weiteren Sicherheit wird in der Regel vorgesehen sein, daß die Kasse den Empfang durch eine signierte Antwort bestätigt.

Eine andere zweckmäßige Möglichkeit besteht darin, daß das mobile Gerät kein Datagramm wie UDP/IP oder entsprechend SMS verwendet, sondern eine Datenverbindung zu der Zahlungszentrale aufbaut und nach dem Senden der Zahlungaaufforderung aufrechterhält. Auch die Nahfeld-Funknetzverbindung wird aufrechterhalten. Mittels dieser beiden stellt das mobile Gerät einen Rückkanal zu der Kasse bereit. Eine bevorzugte Variante besteht darin, daß das mobile Gerät als IP-Router fungiert und somit über die Funkverbindung eine IP-Verbindung von der Zahlungzentrale zu der Kasse vorübergehende bereitstellt. Damit kann das im vorigen Absatz beschriebene Verfahren verwendet werden, ohne daß die Kasse einen ständigen Zugang zu einem IP-Netzwerk haben muß. Die Verwendung von dynamischen IP-Adresse und ggf. IP-Masquerading stehen dem Fachmann selbstverständlich zur Verfügung; insbesondere, solange IP in der Version 6 noch nicht verfügbar ist. Es wird darauf hingewiesen, daß diese Lösung lediglich eine alternative Ausprägung für eine Datenverbindung zwischen Zahlungsserver und Kasse darstellt; diese kann auch parallel zu einer stationären betrieben werden und es den Routing-Protokollen der Datenkommunikationssystem überlassen bleiben, welcher Weg zur Datenübermittlung gewählt wird.

Diese Variante ist, wie oben bereits erwähnt, bei paketorientierten und per Volumen abgerechneten Protokollen wie GPRS oder UTMS besonders attraktiv.

Alternativ zu der direkten Übermittlung der Zahlungbestätigung an die Kasse kann diese auch von der Zahlungszentrale an das mobile Gerät geschickt werden, insbesondere wiederum über SMS, sofern dieser Dienst schnell genug ist. Das mobile Gerät sendet die Zahlungsbestätigung an die Kasse weiter. Da die Zahlungsbestätigung in der Regel digital signiert ist und die Ware erst mit dem Eintreffen der Zahlungsbestätigung von der Kasse freigegeben wird, ist ein negativer Einfluß des mobilen Geräts nicht gegeben. Die Verwendung von IP und dem mobilen Gerät als Router hat jedoch den Vorteil, daß das Verfahren praktisch unabhängig davon wird, ob die Kasse selbst am Internet angeschlossen ist oder dieser Anschluß über das mobile Gerät erreicht wird.

Für die Gutschrift der Beträge zugunsten des Kasseninhabers kann entweder die Zahlungszentrale dies pro Posten oder als Sammelgutschrift bewirkten. Es ist aber auch möglich, daß in der Kasse die Zahlungsbestätigungen gesammelt werden und dann gesammelte an die Zahlungszentrale oder eine andere vereinbarte Stelle senden, die die Zahlungsbestätigungen prüft, die Beträge akkumuliert und eine Sammelgutschrift bewirkt.

Die bisherige Beschreibung ging davon aus, daß beliebige Netzwerke verwendet werden und die Nachrichten daher digital signiert werden. Insbesondere bei der Verwendung geschlossener Benutzergruppen bei X.25 oder ISDN ist beispielsweise ein Signatur der Zahlungsbestätigung nicht notwendig, da in diesem Fall die Kasse sicher sein kann, daß Dritte keinen Zugang zu dem Netz haben. In gleicher Art kann bei Integration der Zahlungszentrale in die Einrichtungen des Netzwerksbetreibers auf die zusätzliche digitale Signatur verzichtet werden, da die Kommunikation ohne hin verschlüsselt ist und der Betreiber über Authentifikationseinrichtungen ohnehin sicher ist, daß ein bestimmter Kunde die Verbindung aufgebaut hat. Da jedoch zeitgemäße Kassen von modifizierten Personal Computern gesteuert werden, deren Rechenleistung für Fenster-Betriebssysteme ausreicht und die die notwendigen kryptographischen Berechnungen in Sekundenbruchteilen erledigen können, wird die digitale Singnatur wie beschrieben bevorzugt.

Verfahren zur digitalen Signatur sind allgemein durch Lehrbücher der Kryptographie bekannt; bevorzugt werden zur Zeit unsymmetrische Verfahren, auch 'public key' genannt, verwendet. Weiter Hinweise können auch der oben genannten Veröffentlichung WO 97/52151 entnommen werden.

Insbesondere kann die Zahlungsbestätigung zusätzlich den eigenen öffentlichen Schlüssel enthalten, der von einer dritten Instanz, wie einer Händlervereinigung, signiert ist. Dieser Vorgang ist nur zwischen Zahlungszentrale und Händlervereinigung notwendig und nicht bilateral zwischen jeder Zahlungszentrale und jeder Kasse.
Gleiches gilt für die Kommunikation zwischen mobilem Gerät und Zahlungszentrale. Insbesondere kann hier der Betreiber des Mobilfunknetzes seinen Kunden deren öffentlichen Schlüssel durch sich selbst signiert bereitstellen. Die Zahlungszentrale muß dann nur die öffentlichen Schlüssel aller Netzbeteiber und nicht die Schlüssel aller Benutzer eines mobilen Geräts kennen.

Es ergibt sich, daß bei der Verwendung des erfindungsgemäßenen Verfahrens insbesondere bei Verwendung kryptographischer Signaturen praktisch keine gegenseitigen Einstellungen zwischen Kasse und Zahlungszentrale bzw. mobilem Gerät und Zahlungszentrale notwendig sind.

## Patentansprüche

1. Verfahren für Durchführung von Zahlungsvorgängen, bei dem
- eine Kasse eine Zahlungsaufforderung drahtlos über eine erste Verbindung an ein mobiles Gerät eines Kunden überträgt,
- dieses die Zahlungsaufforderung prüft,
- bei positivem Ergebnis daraus eine Zahlungsanweisung erzeugt,
- diese über eine zweite Verbindung an eine Zahlungszentrale übermittelt,
- die Zahlungszentrale die Zahlungsanweisung prüft,
- bei positivem Ergebnis die Zahlungszentrale über eine dritte Verbindung eine Zahlungsbestätigung an die Kasse schickt,
- die Kasse die Zahlungsbestätigung prüft und
- bei positvem Ergebnis dieses anzeigt bzw. zu bezahlende Ware freigibt.

2. Verfahren nach Anspruch 1, wobei die Zahlungszentrale, nach positiver Prüfung der Zahlungsanweisung, eine Zahlungsabbuchung an eine Bankzentrale schickt.

3. Verfahren nach Anspruch 1, wobei die Kasse die Zahlungsbestätigungen speichert, akkumuliert und gesammelt an eine Zahlungsausgleichsstelle sendet, welche die Zahlungesbestätigungen prüft, dem Betrag nach akkumuliert und den Gesamtbetrag dem Inhaber der Kasse gutschreibt.

4. Verfahren nach Anspruch 1, 2 oder 3, wobei die Zahlungsanweisung in dem mobilen Gerät digital unterschrieben wird.

5. Verfahren nach Anspruch 1, 2 oder 3, wobei die Zahlungsbestätigung in der Zahlungszentrale digital unterschrieben wird.

6. Verfahren nach einem der vorhergehenden Ansprüche, wobei in der Zahlungsaufforderung die Adresse enthalten ist, an die die Zahlungsbestätigung geschickt wird.

7. Verfahren nach einem der vorhergehenden Ansprüche, wobei die dritte Verbindung mittels der ersten und der zweiten Verbindung realisiert wird.

8. Verfahren nach einem der vorhergeneden Ansprüche, wobei als erste Schnittstelle Bluetooth oder IrDa und als zweite Schnittstelle GSM, GPRS oder UTMS verwendet wird.

9. Kasse für bargeldlose Zahlung mit folgenden Merkmalen:
- Einer ersten Schnittstelle für drahtlose Datenübertragung und einem daran angeschlossenen Sendeagenten, der eine Zahlungsaufforderung erstellt und über die erste Schnittstelle sendet,
- einer zweiten Schnittstelle für Datenübertragung und einer daran angeschlossenen Empfangsagenten, der eine über die Emfangsschnittstelle eingetroffenen Zahlungsbestätigung empfängt,
- einer Prüfeinrichtung, die mit dem Sendeangenten, dem Empfangsagenten und einem Freigabeagenten verbunden ist und darüber die Zahlungsaufforderung sowie die Zahlungsbestätigung erhält, die Authentizität der Zahlungsbestätigung prüft und ferner prüft, ob die Zahlungsbestätigung zu der Zahlungsaufforderung paßt,
- das Prüfungsergebnis an den Freigabeagenten weitergibt, der über eine Ausgabeinrichtung an eine Bedienperson eine Nachricht ausgibt oder eine Warenausgabe freigeschaltet.

10. Mobiles Gerät für bargeldlose Zahlung mit folgenden Merkmalen:
- Einer ersten Schnittstelle für drahtlose Datenübertragung, mittels derer eine Zahlungsaufforderung empfangen wird,
- einer Prüfeinrichtung für die Zahlungssaufforderung, die bei positivem Ergebnis eine Zahlungsanweisung erstellt,
- einer zweiten Schnittstelle für drahtlose Datenübertragung, mittels derer die Zahlungsanweisung an eine Zahlungszentrale übermittelt wird.
